Europäisches Patentamt

European Patent Office

Office européen des brevets

(19)

(11) Veröffentlichungsnummer : **0 042 925**
**B1**

(12) **EUROPÄISCHE PATENTSCHRIFT**

(45) Veröffentlichungstag der Patentschrift :
04.07.84

(21) Anmeldenummer : 81102947.9

(22) Anmeldetag : 16.04.81

(51) Int. Cl.³ : **F 16 F    9/32,** B 60 G  13/00

(54) **Führungskräfte aufnehmender Schwingungsdämpfer, insbesondere für Kraftfahrzeuge, mit einer hohlen Kolbenstange.**

(30) Priorität : 25.06.80 DE 8016784 U
16.08.80 DE 8021915 U

(43) Veröffentlichungstag der Anmeldung :
06.01.82 Patentblatt 82/01

(45) Bekanntmachung des Hinweises auf die Patenterteilung : 04.07.84 Patentblatt 84/27

(84) Benannte Vertragsstaaten :
FR GB IT

(56) Entgegenhaltungen :
DE-A- 2 026 264
DE-A- 2 139 717
DE-A- 2 248 374
DE-A- 2 324 209
DE-C-   939 784
FR-A-   585 505
FR-A- 1 153 636
GB-A-   562 052
GB-A-   794 304
US-A- 3 641 865

(73) Patentinhaber : **Boge GmbH**
**Bogestrasse 50**
**D-5208 Eitorf/Sieg (DE)**

(72) Erfinder : **Schalles, Walter, Ing. grad.**
**Sonnenau 12**
**D-5227 Windeck-Stromberg (DE)**
Erfinder : **Schmidt, Rudolf**
**Ulmenweg 9**
**D-5208 Eitorf/Sieg (DE)**

## Beschreibung

Die Erfindung bezieht sich auf einen Führungskräfte aufnehmenden Schwingungsdämpfer, insbesondere für Kraftfahrzeuge, mit einer im wesentlichen rohrförmigen hohlen Kolbenstange, wobei ein Kolbenzapfen und/oder ein Befestigungszapfen für die Kolbenstange jeweils an einem Ende dieser in den Kolbenstangen-Hohlraum eingepreßt ist und mit dieser durch eine umlaufende Schweißnaht verbunden ist.

Schwingungsdämpfer der vorstehend beschriebenen Gattung werden beispielsweise als radführende Federbeine für Kraftfahrzeuge vielfach verwendet. Bei diesen besteht die Kolbenstange aus gewichtssparenden Gründen aus einem Rohr. Der Dämpferkolben wird mittels des Kolbenzapfens an einem Ende der Kolbenstange befestigt, während der am anderen Ende der Kolbenstange befindliche Befestigungszapfen zur Anlenkung der Kolbenstange am Fahrzeugaufbau dient.

Bei den bekannten Schwingungsdämpfern (z. B. FR-A-1 153 636) ist die Fixierung der erwähnten Zapfen in der hohlen Kolbenstange jeweils durch eine an deren Mantelfläche vorgesehene, an der Luft hergestellte umlaufende Rundnahtschweißung herbeigeführt. Diese Schweißnaht, welche im Hinblick auf die auftretenden hohen Beanspruchungen entsprechend stark ausgebildet sein muß, ist relativ stark nach außen gebuckelt. Der vorragende Buckel der Schweißnaht muß vor der Endbearbeitung (Schleifen) der Kolbenstange zunächst spanend abgehoben werden, wozu in aufwendiger Weise ein Zentrieren der Kolbenstange erforderlich ist.

Darüber hinaus sind Sickenverbindungen bekannt (z. B. DE-C 939 784), bei denen zur öldichten Verbindung mindestens zwei Nuten in dem als Anschluß dienenden Anschlußkopf angeordnet sind. Diese Nuten verlaufen über die gesamte Umfangsfläche. Nachteilig ist hierbei, daß bei rundum verlaufenden Sicken die Stabilität nicht mehr ohne weiteres gegeben ist. Es ist auch bekannt (z. B. DE-C 25 16 656), eine dichte Verbindung zweier Bauteile durch Widerstandspreßschweißen zu erzielen, wobei jedoch bei einem Rohrgehäuse nicht die Zug- und Druckkräfte aufzufangen sind, wie es eine Kolbenstange im Fahrbetrieb zu gewährleisten hat.

Der vorliegenden Erfindung liegt die Aufgabe zugrunde, einen einfachen und wirksamen Schwingungsdämpfer zu schaffen, welcher die Nachteile der bekannten Schwingungsdämpfer vermeidet und bei welchem sich insbesondere bei vereinfachter Herstellung eine höhere Funktionssicherheit vor allem hinsichtlich des Komplexes Kolbenstange — Kolbenzapfen und/oder Befestigungszapfen ergibt.

Diese Aufgabe wird bei einem Schwingungsdämpfer der eingangs erwähnten Gattung erfindungsgemäß dadurch gelöst, daß der Kolbenzapfen und/oder der Befestigungszapfen jeweils in ihrem axial mittleren Abschnitt eine umlaufende Befestigungsnut aufweisen, in welche, vorzugsweise jeweils vier über dem Umfang gleichmäßig verteilte, Sicken der Kolbenstangen-Wandung eingeprägt sind, und die jeweils in einem axial äußeren Endabschnitt von Kolbenzapfen und/oder Befestigungszapfen vorgesehene umlaufende Schweißnaht eine Widerstandspreßschweißung oder Hartlötung ist.

Eine weitere vorteilhafte Erfindungslösung ist dadurch gekennzeichnet, daß der Kolbenzapfen und/oder der Befestigungszapfen jeweils in ihrem axial mittleren Abschnitt eine umlaufende Befestigungsnut aufweisen, in welche, vorzugsweise jeweils vier über dem Umfang gleichmäßig verteilte, Sicken der Kolbenstangen-Wandung eingeprägt sind, und jeweils in einem axial äußeren Endabschnitt von Kolbenzapfen und/oder Befestigungszapfen eine umlaufende Verbindungsnut vorgesehen ist, in welche die axialen Enden des Kolbenstangenrohres eingerollt und im Nutgrund durch eine Naht verschweißt sind.

Gemäß der Erfindung sind der Kolbenzapfen und/oder der Befestigungszapfen derart kraftschlüssig mit der Kolbenstange verbunden, daß bei Erfüllung der geforderten zweifachen Sicherheit (die Kolbenstange gilt als Sicherheitsteil) auch aus Funktions- und Korrosionsgründen praktisch vollkommene Gasdichtheit gewährleistet ist. Hierzu sind die beiden Zapfen entsprechend abgestuft in das Kolbenstangenrohr eingepreßt, und die örtlichen Sicken nehmen die im Betrieb aufnehmenden Zug- und Druckkräfte über die Befestigungsnut in den Zapfen kraftschlüssig auf. Die zusätzlich vorgesehene umlaufende Schweißnaht oder Hartlötnaht im Bereich der beiden Kolbenstangenenden ergibt eine zusätzliche Formschlüssigkeit und dichtet gleichzeitig gasdicht ab. Durch Einprägung von einzelnen Sicken anstelle etwa einer umlaufenden Einprägung wird die Kolbenstange an dieser Stelle praktisch nicht geschwächt. Durch die gemäß der Erfindung vorgesehene gasdichte Befestigung des Kolbenzapfens und/oder des Befestigungszapfens in dem Kolbenstangenrohr durch eine Widerstandspreßschweiß- oder Hartlötnaht bzw. durch das Einrollen der axialen Enden des Kolbenstangenrohres in Nuten und Verlegung der Schweißnaht in den Nutgrund wird der Außendurchmesser des Kolbenstangenrohres praktisch nicht verändert. Somit entfällt das bisherige spanende Abtragen der Schweißnaht vor der Endbearbeitung, so daß eine erfindungsgemäße Kolbenstange nebst zugehörigen Zapfen auf besonders einfache Weise zentrierfrei geschliffen werden kann. Die erfindungsgemäße Vorrichtung hat im Ergebnis bei einfacher Herstellung eine merklich verbesserte Funktionssicherheit und somit auch Lebensdauer.

Gemäß einer vorteilhaften Ausbildung der Erfindung erweitert sich auf einfache Weise die Befestigungsnut ausgehend von einem zur

Kolbenstange koaxial zylindrischen Nutgrund beidseitig nach außen mit ebenen Nutflanken.

Gemäß einem weiteren ebenfalls besonders vorteilhaften Erfindungsmerkmal weist der jeweils axial äußere Endabschnitt einen größeren Durchmesser auf und ist durch einen schrägen Übergangsabschnitt mit dem im Kolbenstangen-Hohlraum befindlichen übrigen Abschnitt des Kolbenzapfens und/oder des Befestigungszapfens verbunden, wobei der Kolbenstangen-Hohlraum eine entsprechend abgestufte Ausbildung aufweist. Auf diese Weise ergibt sich in den äußeren Endabschnitten der Zapfen jeweils eine entsprechend verringerte Wandstärke der hohlen Kolbenstange derart, daß die erfindungsgemäß vorgesehene Widerstandspreßschweiß/Hartlötnaht besonders wirksam angebracht werden kann.

Eine besonders rationelle Konstruktion ergibt sich, wenn erfindungsgemäß die im Kolbenstangen-Hohlraum angeordneten Abschnitte von Kolbenzapfen und Befestigungszapfen gleich ausgebildet sind. Hierdurch wird insgesamt eine beidseitig gleiche Ausbildung des Komplexes Kolbenstange — Kolbenzapfen bzw. Befestigungszapfen ermöglicht.

Eine weitere besonders vorteilhafte Erfindungslösung ist dadurch gekennzeichnet, daß der Kolbenzapfen und/oder der Befestigungszapfen jeweils in ihrem axial mittleren Abschnitt eine umlaufende Befestigungsnut aufweisen, in welche, vorzugsweise jeweils vier über dem Umfang gleichmäßig verteilte, Sicken der Kolbenstangen-Wandung eingeprägt sind, und die jeweils in einem axial äußeren Endabschnitt von Kolbenzapfen und/oder Befestigungszapfen vorgesehene umlaufende Schweißnaht eine Rollnaht-Preßschweißung ist.

Auch bei dieser Erfindungslösung sind der Kolbenzapfen und/oder der Befestigungszapfen derart kraftschlüssig mit der Kolbenstange verbunden, daß bei Erfüllung der geforderten zweifachen Sicherheit (die Kolbenstange gilt als Sicherheitsteil) auch aus Funktions- und Korrosionsgründen praktisch vollkommene Gasdichtheit gewährleistet ist. Hierzu sind die beiden Zapfen entsprechend abgestuft in das Kolbenstangenrohr eingepreßt, und die örtlichen Sicken nehmen die im Betrieb aufnehmenden Zug- und Druckkräfte über die Befestigungsnut in den Zapfen kraftschlüssig auf. Die zusätzlich vorgesehene umlaufende Rollnaht-Preßschweißung im Bereich der beiden Kolbenstangenenden ergibt eine zusätzliche Formschlüssigkeit und dichtet gleichzeitig gasdicht ab. Durch Einprägung von einzelnen Sicken anstelle etwa einer umlaufenden Einprägung wird die Kolbenstange an dieser Stelle praktisch nicht geschwächt. Da eine Rollnaht-Preßschweißung nur unwesentlich radial aufbaut, entfällt das bisherige spanende Abtragen der Schweißnaht vor der Endbearbeitung, so daß eine erfindungsgemäße Kolbenstange nebst zugehörigen Zapfen auf besonders einfache Weise entrierfrei geschliffen werden kann. Die erfindungsgemäße Vorrichtung hat im Ergebnis bei einfacher Herstellung eine merklich verbesserte Funktionssicherheit und somit auch Lebensdauer.

Ein besonderer Vorteil dieser Erfindungslösung ergibt sich dadurch, daß eine Rollnaht-Preßschweißung bekanntlich unter Wassersprühung hergestellt wird, so daß wegen der damit verbundenen kontinuierlichen guten Wärmeabfuhr kein großer Temperaturgradient und somit praktisch kein Festigkeitsabfall im Bereich der Schweißnahtgrenzen herbeigeführt wird.

Gemäß einer vorteilhaften Ausbildung auch dieser Erfindungslösung erweitert sich auf einfache Weise die Befestigungsnut ausgehend von einem zur Kolbenstange koaxial zylindrischen Nutgrund beidseitig nach außen mit ebenen Nutflanken.

Gemäß einem weiteren ebenfalls besonders vorteilhaften Erfindungsmerkmal weist auch bei dieser Erfindungslösung der jeweils axial äußere Endabschnitt einen größeren Durchmesser auf und ist durch einen schrägen Übergangsabschnitt mit dem im Kolbenstangen-Hohlraum befindlichen übrigen Abschnitt des Kolbenzapfens und/oder des Befestigungszapfens verbunden, wobei der Kolbenstangen-Holraum eine entsprechend abgestufte Ausbildung aufweist. Auf diese Weise ergibt sich in den äußeren Endabschnitten der Zapfen jeweils eine entsprechend verringerte Wandstärke der hohlen Kolbenstange derart, daß die erfindungsgemäß vorgesehene Rollnaht-Preßschweißung besonders wirksam angebracht werden kann.

Eine besonders rationelle Konstruktion ergibt sich auch hier, wenn erfindungsgemäß die im Kolbenstangen-Hohlraum angeordneten Abschnitte von Kolbenzapfen und Befestigungszapfen gleich ausgebildet sind. Hierdurch wird insgesamt eine beidseitig gleiche Ausbildung des Komplexes Kolbenstange-Kolbenzapfen bzw. Befestigungszapfen ermöglicht.

Die Erfindung wird nachstehend anhand von in der Zeichnung schematisch dargestellten Ausführungsbeispielen näher erläutert. Es zeigen:

Figur 1 eine hohle Kolbenstange eines Schwingungsdämpfers mit darin befestigtem Kolbenzapfen und Befestigungszapfen nach der Erfindung, teilweise im axialen Längsschnitt,

Figur 2 eine weitere Lösung der Erfindung, teilweise gebrochen und im axialen Längsschnitt,

Figur 3 Schnitte II-II aus Figur 1 und 2,

Figur 4 eine nochmals weitere Erfindungslösung, teilweise im axialen Längsschnitt, und

Figur 5 Schnitte V-V aus Figur 4.

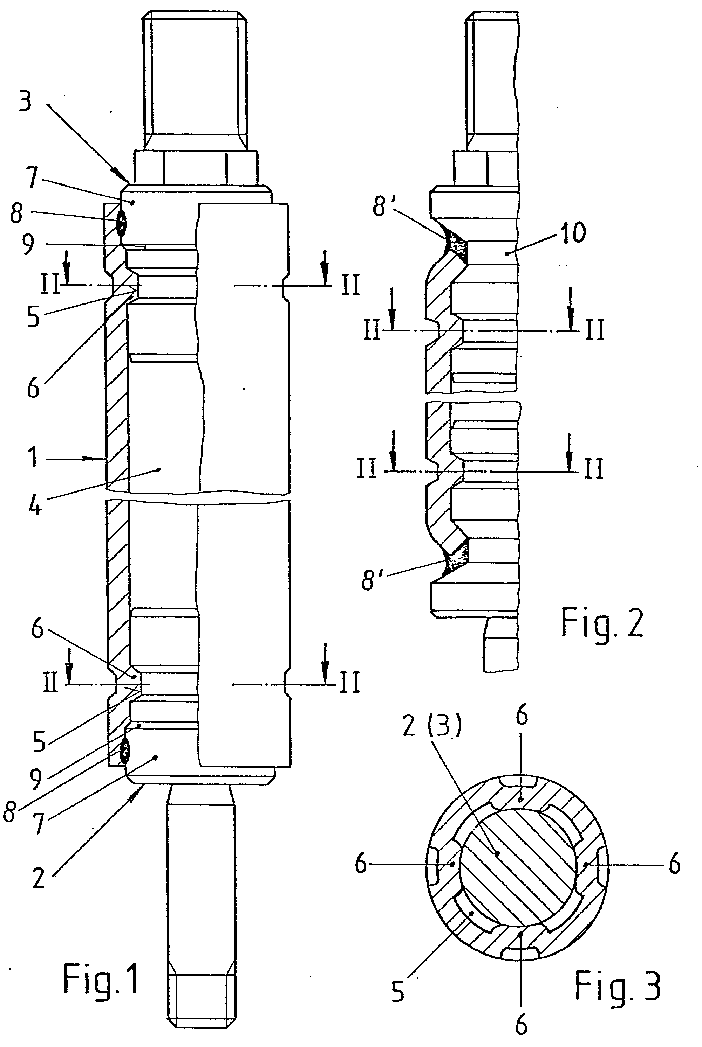

Die in Figur 1 dargestellte Kolbenstange beispielsweise eines radführenden Federbeins für Kraftfahrzeuge weist ein Kolbenstangenrohr 1 auf. In dem einen Ende dieses ist ein Kolbenzapfen 2 und im anderen Ende dieses ein Befestigungszapfen 3 gemäß der Erfindung befestigt.

Insbesondere sind die beiden Zapfen 2 und 3 jeweils in den Kolbenstangenhohlraum 4 eingepreßt. Dabei weisen der Kolbenzapfen 2 und der Befestigungszapfen 3 jeweils in ihrem axial mittleren Abschnitt eine umlaufende Befestigungsnut 5 auf, in welche jeweils vier über dem Umfang gleichmäßig verteilte örtliche Sicken 6 der Kolbenstangen-Wandung eingeprägt sind.

Jeweils in einem axial äußeren Endabschnitt 7 der im Kolbenstangen-Hohlraum 4 befindlichen Abschnitte von Kolbenzapfen 2 und Befestigungszapfen 3 ist eine umlaufende widerstandspreßschweißnaht oder Hartlötnaht 8 vorgesehen.

Im einzelnen erweitert sich die Befestigungsnut 5 ausgehend von einem zur Kolbenstange 1 koaxialen zylindrischen Nutgrund beidseitig nach außen mit ebenen Nutflanken.

Die jeweils axial äußeren Endabschnitte 7 weisen einen größeren Durchmesser auf und sind jeweils durch einen schrägen Übergangsabschnitt 9 mit dem im Kolbenstangen-Hohlraum 4 befindlichen übrigen Abschnitt des Kolbenzapfens 2 bzw. des Befestigungszapfens 3 verbunden. Im Bereich der Abschnitte 7 und 9 weist der Kolbenstangen-Hohlraum 4 jeweils eine entsprechende abgestufte Ausbildung auf.

Wie aus der Zeichnung ersichtlich, sind die im Kolbenstangen-Hohlraum 4 angeordneten Abschnitte von Kolbenzapfen 2 und Befestigungszapfen 3 gleich ausgebildet. Folglich ergibt sich auch in den beiden zugehörigen Endbereichen der Kolbenstange 1 eine gleiche Ausbildung dieser.

Die in Figur 2 dargestellte Kolbenstange hat im Unterschied zu der in Figur 1 dargestellten an den äußeren Enden des Kolbenzapfens 2 und des Befestigungszapfens 3 jeweils eine zusätzliche umlaufende Verbindungsnut 10, die sich beidseitig nach außen mit ebenen Nutflanken erweitert. Die beiden axialen Enden des Kolbenstangenrohres 1 sind jeweils nach innen in die Verbindungsnut 10 eingererollt und im verbleibenden Nutquerschnitt durch eine Rundschweißnaht 8' umlaufend verschweißt. Die Rundschweißnaht 8' hat dabei einen geringeren Außendurchmesser als das Kolbenstangenrohr 1. Im übrigen entspricht der Aufbau der Ausführung nach Figur 2 dem in Figur 1 dargestellten Ausführungsbeispiel.

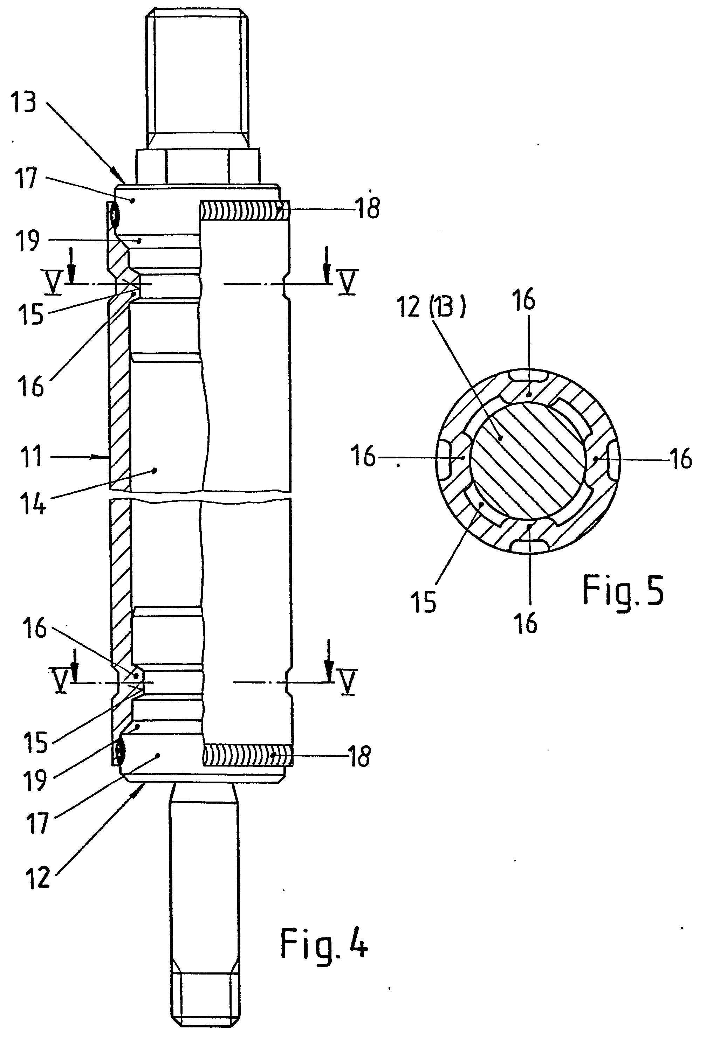

Die in Figur 4 dargestellte Kolbenstange beispielsweise eines radführenden Federbeins für Kraftfahrzeuge weist ein Kolbenstangenrohr 11 auf. An dem einen Ende dieser ist ein Kolbenzapfen 12 und im anderen Ende dieser ein Befestigungszapfen 13 gemäß der Erfindung befestigt.

Insbesondere sind die beiden Zapfen 12 und 13 jeweils in den Kolbenstangenhohlraum 14 eingepreßt. Dabei weisen der Kolbenzapfen 12 und der Befestigungszapfen 13 jeweils in ihrem axial mittleren Abschnitt eine umlaufende Befestigungsnut 15 auf, in welche jeweils vier über dem Umfang gleichmäßig verteilte örtliche Sicken 16 der Kolbenstangen-Wandung eingeprägt sind.

Jeweils in einem axial äußeren Endabschnitt 17 der im Kolbenstangen-Hohlraum 14 befindlichen Abschnitte von Kolbenzapfen 12 und Befestigungszapfen 13 ist eine umlaufende Rollnaht-Preßschweißung 18 vorgesehen.

Im einzelnen erweitert sich die Befestigungsnut 15 ausgehend von einem zur Kolbenstange 11 koaxialen zylindrischen Nutgrund beidseitig nach Außen mit ebenen Nutflanken.

Die jeweils axial äußeren Endabschnitte 17 weisen einen größeren Durchmesser auf und sind jeweils durch einen schrägen Übergangsabschnitt 19 mit dem im Kolbenstangen-Hohlraum 14 befindlichen übrigen Abschnitt des Kolbenzapfens 12 bzw. des Befestigungszapfens 13 verbunden. Im Bereich der Abschnitte 17 und 19 weist der Kolbenstangen-Hohlraum 14 jeweils eine entsprechend abgestufte Ausbildung auf.

Wie aus der Zeichnung ersichtlich, sind die im Kolbenstangen-Hohlraum 14 angeordneten Abschnitte von Kolbenzapfen 12 und Befestigungszapfen 13 gleich ausgebildet. Folglich ergibt sich auch in den beiden zugehörigen Endbereichen der Kolbenstange 11 eine gleiche Ausbildung dieser.

**Ansprüche**

1. Führungskräfte aufnehmender Schwingungsdämpfer, insbesondere für Kraftfahrzeuge, mit einer im wesentlichen rohrförmigen hohlen Kolbenstange, wobei ein Kolbenzapfen (2, 12) und/oder ein Befestigungszapfen (3,13) für die Kolbenstange jeweils an einem Ende dieser in den Kolbenstangen-Hohlraum (4, 14) eingepreßt ist und mit dieser durch eine umlaufende Schweißnaht (8, 18) verbunden ist, dadurch gekennzeichnet, daß der Kolbenzapfen (2) und/oder der Befestigungszapfen (3) jeweils in ihrem axial mittleren Abschnitt eine umlaufende Befestigungsnut (5) aufweisen, in welche, vorzugsweise jeweils vier über dem Umfang gleichmäßig verteilte Sicken (6) der Kolbenstangen-Wandung (1) eingeprägt sind, und die jeweils in einem axial äußeren Endabschnitt (7) von Kolbenzapfen (2) und/oder Befestigungszapfen (3) vorgesehene umlaufende Schweißnaht eine Widerstandspreßschweißung oder Hartlötung (8) ist.

2. Führungskräfte aufnehmender Schwingungsdämpfer, insbesondere für Kraftfahrzeuge, mit einer im wesentlichen rohrförmigen hohlen Kolbenstange, wobei ein Kolbenzapfen (2, 12) und/oder ein Befestigungszapfen (3,13) für die Kolbenstange jeweils an einem Ende dieser in den Kolbenstangem-Hohlraum (4, 14) eingepreßt ist und mit dieser durch eine umlaufende Schweißnaht (8, 18) verbunden ist, dadurch gekennzeichnet, daß der Kolbenzapfen (2) und/oder der Befestigungszapfen (3) jeweils in ihrem axial mittleren Abschnitt eine umlaufende Befestigungsnut (5) aufweisen, in welche, vorzugsweise jeweils vier über dem Umfang gleichmäßig verteilte, Sicken (6) der Kolbenstangen-Wandung (1) eingeprägt sind, und jeweils in einem axial äußeren Endabschnitt (7) von Kolbenzapfen (2) und/oder Befestigungszapfen (3) eine umlaufende Verbindungsnut (10) vorgesehen ist, in welche die axialen Enden des Kolbenstangenrohres (1) eingerollt und im Nutgrund durch eine Naht (8') verschweißt sind.

3. Schwingungsdämpfer nach Anspruch 1 oder 2, dadurch gekennzeichnet, daß die Befestigungsnut (5) sich ausgehend von einem zur Kolbenstange (1) koaxialen zylindrischen Nutgrund beidseitig nach außen mit ebenen Nutflanken erweitert.

4. Schwingungsdämpfer nach Anspruch 1 und/oder 3, dadurch gekennzeichnet, daß der jeweils axial äußere Endabschnitt (7) einen größeren Durchmesser aufweist und durch einen schrägen Übergangsabschnitt (9) mit dem im Kolbenstangen-Hohlraum (4) befindlichen übrigen Abschnitt des Kolbenzapfens (2) und/oder des Befestigungszapfens (3) verbunden ist, wobei der Kolbenstangen-Hohlraum (4) eine entsprechend abgestufte Ausbildung aufweist.

5. Schwingungsdämpfer nach einem der Ansprüche 1 bis 4, dadurch gekennzeichnet, daß die im Kolbenstangen-Hohlraum (4) angeordneten Abschnitte von Kolbenzapfen (2) und Befestigungszapfen (3) gleich ausgebildet sind.

6. Führungskräfte aufnehmender Schwingungsdämpfer, insbesondere für Kraftfahrzeuge, mit einer im wesentlichen rohrförmigen hohlen Kolbenstange, wobei ein Kolbenzapfen und/oder ein Befestigungszapfen für die Kolbenstange jeweils an einem Ende dieser in den Kolbenstangen-Hohlraum eingepreßt ist und mit dieser durch eine umlaufende Schweißnaht verbunden ist, dadurch gekennzeichnet, daß der Kolbenzapfen (12) und/oder der Befestigungszapfen (13) jeweils in ihrem axial mittleren Abschnitt eine umlaufende Befestigungsnut (15) aufweisen, in welche, vorzugsweise jeweils vier über dem Umfang gleichmäßig verteilte, Sicken (16) der Kolbenstangen-Wandung (11) eingeprägt sind, und die jeweils in einem axial äußeren Endabschnitt (17) von Kolbenzapfen (12) und/oder Befestigungszapfen (13) vorgesehene umlaufende Schweißnaht eine Rollnaht-Preßschweißung (18) ist.

7. Schwingungsdämpfer nach Anspruch 6, dadurch gekennzeichnet, daß die Befestigungsnut (15) sich ausgehend von einem zur Kolbenstange (11) koaxialen zylindrischen Nutgrund beidseitig nach außen mit ebenen Nutflanken erweitert.

8. Schwingungsdämpfer nach Anspruch 6 oder 7, dadurch gekennzeichnet, daß der jeweils axial äußere Endabschnitt (17) einen größeren Durchmesser aufweist und durch einen schrägen Übergangsabschnitt (19) mit dem im Kolbenstangen-Hohlraum (14) befindlichen übrigen Abschnitt des Kolbenzapfens (12) und/oder des Befestigungszapfens (13) verbunden ist, wobei der Kolbenstangen-Hohlraum (14) eine entsprechend abgestufte Ausbildung aufweist.

9. Schwingungsdämpfer nach einem der Ansprüche 6 bis 8, dadurch gekennzeichnet, daß die im Kolbenstangen-Hohlraum (14) angeordneten Abschnitte von Kolbenzapfen (12) und Befestigungszapfen (13) gleich ausgebildet sind.

**Claims**

1. Vibration damper taking guiding forces, especially for motor vehicles, with a substantially tubular hollow piston rod, a piston-mounting spigot (2, 12) and/or an attachment spigot (3, 13) for the piston rod being pressed into a respective end of the interior (4, 14) of the piston rod and being connected to it by a circumferentially extending seam weld (8, 18), characterised in that, the piston-mounting spigot (2) and/or the attachment spigot (3) has respectively in its axially intermediate portion a circumferentially extending attachment groove (5) into which are displaced depressions (6) from the wall (1) of the piston rod, preferably four in number and distributed uniformly around the periphery, and the circumferential seam weld provided in a respective axially outer end portion (7) of the piston-mounting spigot (2) and/or attachment spigot (3) is a resistance pressure weld or brazed joint (8).

2. Vibration damper taking guiding forces, especially for motor vehicles, with a substantially tubular hollow piston rod, a piston-mounting spigot (2, 12) and/or an attachment spigot (3, 13) for the piston rod being pressed into a respective end of the interior (4,14) of the piston rod and being connected to it by a circumferentially extending seam weld (8, 18), characterised in that, the piston-mounting spigot (2) and/or on the attachment spigot (3) has respectively in its axially intermediate portion a circumferentially extending attachment groove (5) into which are displaced depressions (6) from the wall (1) of the piston rod, preferably four in number and distributed uniformly around the periphery, and a circumferentially extending attachment groove (10) is provided in a respective axially outer end portion (7) of the piston-mounting spigot (2) and/or the attachment spigot (3), into which the axial ends of the piston rod tube (1) are rolled and welded into the base of the groove by a seam (8').

3. Vibration damper according to claim 1 or 2, characterised in that, the attachment groove (5) has a cylindrical base coaxial with the piston rod (1) and diverges outwards with straight flanks in both directions.

4. Vibration damper according to claim 1 and/or 3, characterised in that, the respective axially outer end portion (7) has a larger diameter than, and is joined by an inclined transition portion (9) to, the remaining portion, present in the piston rod cavity (4), of the piston-mounting spigot (2) and/or of the attachment spigot (3), the cavity (4) in the piston rod having a correspondingly stepped formation.

5. Vibration damper according to one of claims 1 to 4, characterised in that, the portions of the piston-mounting spigot (2) and the attachment spigot (3) disposed in the cavity (4) in the piston rod are made the same.

6. Vibration damper taking guiding forces, especially for motor vehicles, with a substantially tubular hollow piston rod, a piston-mounting spigot and/or an attachment spigot for the piston rod being pressed into a respective end of the interior of the piston rod and being connected to it by a circumferentially extending seam weld, characterised in that, the piston-mounting spigot (12) and/or the attachment spigot (13) has respectively in its axially intermediate portion a circumferentially extending attachment groove (15) into which are displaced depressions (16) from the wall (11) of the piston rod, preferably four in number and uniformly distributed around the periphery, and the respective circumferentially extending seam weld provided in an axially outer end portion (17) of the piston-mounting spigot (12) and/or the attachment spigot (13) is a rolled seam pressure weld (18).

7. Vibration damper according to claim 6, characterised in that, the attachment groove (15) is basically a cylindrical groove coaxial with the piston rod (11) and widened by outwardly extending straight flanks on both sides.

8. Vibration damper according to claim 6 or 7, characterised in that, the respective axially outer end portion (17) has a larger diameter than, and is joined by an inclined transition portion (19) to, the remaining portion, present in the cavity (14) in the piston rod, of the piston-mounting spigot (12) and/or of the attachment spigot (13), the cavity (14) in the piston rod having a correspondingly stepped formation.

9. Vibration damper according to one of claims 6 to 8, characterised in that, the portions of the piston-mounting spigot (12) and the attachment spigot (13) disposed in the cavity (14) of the piston rod are made the same.

## Revendications

1. Amortisseur encaissant les contraintes de guidage ayant une tige de piston creuse sensiblement tubulaire, destiné en particulier aux véhicules automobiles, dans lequel un embout de piston (2, 12) et/ou un embout de fixation (3, 13) de la tige de piston sont emmanchés dans la cavité (4, 14) de la tige de piston, chacun à une extrémité de cette tige, et sont assemblés à cette dernière, chacun par un joint soudé périphérique (8, 18), caractérisé en ce que l'embout de piston (2) et/ou l'embout de fixation (3) présentent, chacun dans son segment axialement central, une gorge de fixation périphérique (5) dans laquelle sont serties de préférence quatre moulures (6) de la paroi (1) de la tige de piston, uniformément réparties sur la périphérie, et le joint soudé périphérique prévu dans un segment terminal axialement extérieur (7) de l'embout de piston (2) et/ou de l'embout de fixation (3) est une soudure par résistance à pression ou une brasure (8).

2. Amortisseur encaissant les contraintes de guidage, notamment pour véhicules automobiles, comprenant une tige de piston creuse sensiblement tubulaire, dans lequel un embout de piston (2, 12) et/ou un embout de fixation (3, 13) de la tige de piston sont emmanchés dans une cavité (4, 14) de la tige de piston, chacun à une extrémité de cette tige, et sont assemblés à cette dernière par un joint soudé périphérique (8, 18), caractérisé en ce que l'embout de piston (2) et/ou l'embout de fixation (3) présentent, chacun dans son segment axialement central, une gorge de fixation périphérique (5) dans laquelle sont serties de préférence quatre moulures (6) de la paroi de la tige de piston (1) uniformément réparties sur la périphérie et il est prévu dans un segment terminal axialement extérieur (7) de l'embout de piston (2) et/ou de l'embout de fixation (3), une gorge de fixation périphérique (10) dans laquelle l'extrémité axiale correspondante du tube (1) de la tige de piston est roulée et soudée dans le fond de la gorge par un joint soudé (8').

3. Amortisseur selon la revendication 1 ou 2, caractérisé en ce que, en partant d'un fond de gorge cylindrique, coaxial à la tige de piston (1), la gorge cylindrique, coaxial à la tige de piston (1), la gorge de fixation (5) s'élargit des deux côtés vers l'extérieur avec des flancs de gorge plats.

4. Amortisseur selon les revendications 1 et/ou 3, caractérisé en ce que le segment terminal axialement extérieur (7) possède un plus grand diamètre et se raccorde par un segment de transition oblique (9) au segment restant de l'embout de piston (2) et/ou de l'embout de fixation (3) qui se trouve dans la cavité (4) de la tige de piston, la cavité (4) de la tige de piston présentant une configuration étagée de façon correspondante.

5. Amortisseur selon l'une des revendications 1 à 4, caractérisé en ce que les segments de l'embout de piston (2) et de l'embout de fixation (3) qui sont placés dans la cavité (4) de la tige de piston sont de même configuration.

6. Amortisseur encaissant les contraintes de guidage, ayant une tige de piston creuse sensiblement tubulaire, destiné en particulier aux véhicules automobiles, dans lequel un embout de piston et/ou un embout de fixation de la tige de piston sont emmanchés dans la cavité de la tige de piston, chacun à une extrémité de cette tige, et sont assemblés à cette dernière par un joint soudé périphérique, caractérisé en ce que l'embout de piston (12) et/ou l'embout de fixation (13) présentent, chacun dans son segment axialement central, une gorge de fixation périphérique (15) dans laquelle sont serties de préférence quatre moulures (16) de la paroi (11) de la tige de piston uniformément réparties sur la périphérie, et le joint soudé périphérique prévu dans un segment terminal axialement extérieur (17) de l'embout de piston (12) et/ou de l'embout de fixation (13) est une soudure par pression à la molette (18).

7. Amortisseur selon la revendication 6, caractérisé en ce que, en partant d'un fond de gorge cylindrique coaxial à la tige de piston (11), la gorge de fixation (15) s'élargit des deux côtés vers l'extérieur avec des flancs de gorge plats.

8. Amortisseur selon la revendication 6 ou 7, caractérisé en ce que le segment terminal axialement extérieur (17) présente un plus grand diamètre et se raccorde par un segment de transition oblique (19) au segment restant de l'embout de piston (12) et/ou de l'embout de fixation (13) qui se trouve dans la cavité (14) de la tige de piston, la cavité (14) de la tige de piston présentant une configuration étagée de façon correspondante.

9. Amortisseur selon l'une des revendications 6 à 8, caractérisé en ce que les segments de l'embout de piston (12) et de l'embout de fixation (13) situés dans la cavité (14) de la tige de piston sont de même configuration.

Fig.1

Fig. 2

Fig. 3

Fig.4

Fig.5